# EUROPÄISCHE PATENTSCHRIFT

(11) **EP 1 159 162 B1**
(45) Veröffentlichungstag und Bekanntmachung des Hinweises auf die Patenterteilung: **17.03.2004**
(21) Anmeldenummer: 00991538.0
(22) Anmeldetag: 21.12.2000
(51) Int. Cl.: B60R 21/01

(54) **ANORDNUNG ZUR DEAKTIVIERUNG EINER AIRBAG-ZÜNDVORRICHTUNG**
ARRANGEMENT FOR DEACTIVATING A FIRING DEVICE OF AN AIRBAG
ENSEMBLE POUR DESACTIVER UN DISPOSITIF D'ALLUMAGE D'AIRBAG

(30) Priorität: 07.01.2000 DE 10000376; 20.06.2000 DE 10030248
(43) Veröffentlichungstag der Anmeldung: 05.12.2001
(73) Patentinhaber: ROBERT BOSCH GMBH, 70442 Stuttgart (DE)
(72) Erfinder: MATTES, Bernhard, 74343 Sachsenheim (DE); MALICKI, Siegfried, 74379 Ingersheim (DE)
(86) Internationale Anmeldenummer: PCT/DE2000/004567
(87) Internationale Veröffentlichungsnummer: WO 2001/049533

(56) Entgegenhaltungen:
- DE-C- 19 617 250
- DE-C- 19 835 709
- US-A- 5 739 757
- US-A- 5 882 035

## Beschreibung

### Stand der Technik

Die vorliegende Erfindung betrifft eine Anordnung zur Deaktivierung einer Zündvorrichtung für einen in einem Fahrzeug eingebauten Airbag, wobei Schaltungsmittel vorhanden sind, welche einen Stromfluß durch die Zündvorrichtung während einer gewünschten Deaktivierungszeit verhindern.

Es hat in der Vergangenheit einige Fälle gegeben, bei denen Kinder, die auf dem Beifahrersitz des Fahrzeugs in einem rückwärts gerichteten Kindersitz saßen, durch Auslösen des Beifahrerairbags tödliche Verletzungen erlitten haben. Diese Unglücksfälle hätten durch eine Deaktivierung des Beifahrerairbags verhindert werden können. Überhaupt gibt es Situationen, in denen eine Aktivierung des Beifahrerairbags überflüssig ist, z.B. wenn der Beifahrersitz gar nicht mit einer Person besetzt ist, sondern auf ihm irgendein Gegenstand, z.B. ein Gepäckstück, abgelegt ist. Um solche Situationen zu erkennen, in denen der Beifahrerairbag deaktiviert werden sollte, gibt es bereits bekannte Systeme und Vorrichtungen, die in der DE 19 724 344 C1 erwähnt werden. Sehr aufwendig sind Bildverarbeitungssysteme, die erkennen konnen, ob der Beifahrersitz mit einem Kindersitz oder einer Person oder einem Gegenstand belegt ist und welchen Abstand die Person vom Beifahrerairbag hat, so dass bei kritischen Belegungsarten der Airbag deaktiviert werden kann. Eine andere Vorrichtung zur Sitzbelegungserkennung besteht aus einer im Beifahrersitz integrierten Matte, die in Abhängigkeit von einer Kraft- oder Druckeinwirkung ihren elektrischen Widerstand bzw. ihre Kapazität ändert. Diese Matte hat also die Funktion eines Gewichtssensors, um festzustellen, ob der Sitz mit einer erwachsenen Person oder einem Kind belegt ist.

Desweiteren gibt es Sensoren, welche das Vorhandensein eines rückwärts gerichteten Kindersitzes auf dem Beifahrersitz erkennen. Dazu gehören Sensoren, die auf einem elektromagnetischen Transponderprinzip beruhen, wobei am Kindersitz und im Beifahrersitz Sender und Empfänger angeordnet sind. In der EP 06 037 33 B1 wird eine auch unter dem Namen ISOFIX bekannte Arretierungsvorrichtung für einen Kindersitz auf dem Beifahrersitz eines Fahrzeugs beschrieben. Die Arretierung des Kindersitzes erfolgt mittels am Kindersitz vorhandener Rastelemente, welche mit einer Befestigungsvorrichtung am Beifahrersitz verrastet werden können. Ein Sensor erfaßt die Einrastung der Rastelemente und gibt dabei einen Impuls ab, der einem Steuergerät zur Deaktivierung des Beifahrerairbags zugeführt wird.

Die einfachste Vorrichtung zur Deaktivierung eines Beifahrerairbags besteht in einem handbetätigbaren Schalter, der, wie aus der DE 197 24 344 C1 und der US 5,544,914 hervorgeht, eine erste Schaltposition zur Aktivierung und eine zweite Schaltposition zur Deaktivierung der Zündvorrichtung des Airbags aufweist.

All diese genannten Systeme wirken so, dass sie zur Deaktivierung des Beifahrerairbags den Stromkreis der Zündvorrichtung unterbrechen. Es hat aber auch Situationen gegeben, bei denen es zu einer Auslösung des Beifahrerairbags gekommen ist, obwohl dieser durch softwareprogrammierte Unterbrechung des Zünd-Stromkreises deaktiviert worden ist. Als Ursachen kommen möglicherweise Funktionsstörungen eines Mikrocontrollers in der Airbagsteuereinheit oder auch eine Direkteinstrahlung genügend großer elektromagnetischer Energie von außen in die Zuleitungen der Zündvorrichtungen in Frage. Ebenso könnten für die Auslösung des Airbags Kurzschlüsse nach Plus und Minus der Batteriespannung durch aufprallbedingte Karosserieverformungen verantwortlich sein.

Aus der gattungsbildenden DE 196 17 250 C1 ist eine Deaktivierung eines Zündelements für einen Airbag bekannt, wobei die Deaktivierung durch einen Kurzschlussschalter erreicht wird. Die Deaktivierung wird bei zu hoher Feuchtigkeit, bei einem Fehler im Bordnetz oder, wenn Beschleunigungssensoren keinen Auslösefall anzeigen, durchgeführt. Aus DE 198 35 709 C1 ist es bekannt, eine Zündpille zu deaktivieren, indem ein Leerlauf erzeugt wird. Aus US 5739757 ist es bekannt, einen Airbag zu deaktivieren, wenn eine bestimmte Gewichtsschwelle nicht überschritten wird. Aus US 5882035 ist eine Kindersitzverankerung beschrieben, bei deren Betätigung ein Airbag deaktiviert wird.

Der Erfindung liegt daher die Aufgabe zugrunde, eine Anordnung der eingangs genannten Art anzugeben, die sicher gewährleistet, dass es unter keinen Umständen zu einer ungewollten Airbagauslösung kommen kann.

### Vorteile der Erfindung

Die genannte Aufgabe wird mit den Merkmalen des Anspruchs 1 dadurch gelöst, dass die Zündvorrichtung von einem durch die Schaltungsmittel elektrisch steuerbaren Schalter überbrückt ist, der den Stromkreis der Zündvorrichtung während der Deaktivierungszeit kurzschließt. Dieser die Zündvorrichtung überbrückende Kurzschlußschalter bewirkt, dass kein eine Auslösung der Zündvorrichtung verursachender Strom, egal wodurch dieser Strom entsteht, durch die Zündvorrichtung fließen kann.

Vorteilhafte Weiterbildungen der Erfindung gehen aus den Unteransprüchen hervor.

Insbesondere zur Deaktivierung des Beifahrerairbags bei den einleitend erwähnten Belegungsarten des Beifahrersitzes sind Mittel vorhanden, welche solche Situationen signalisieren, in denen die Zündvorrichtung nicht ausgelöst werden darf. Vorteilhafterweise bestehen diese Mittel z. B. aus einem von Hand betätigbaren Schalter oder aus einer Sensorik, welche die Art der Sitzbelegung erfaßt. Oder die Mittel wirken mit einer Rastvorrichtung zusammen, mit der ein Kindersitz auf dem Beifahrersitz eines Fahrzeugs arretierbar ist, wobei die Mittel dann einen Nichtauslösefall signalisieren, wenn die Rastvorrichtung eingerastet ist.

Eine sehr große Sicherheit gegen eine Airbag-Fehlauslösung wird dadurch gewährleistet, dass die Schaltungsmittel den Schalter fortwährend geschlossen halten, so dass die Zündvorrichtung kurzgeschlossen ist, und dass die Schaltungsmittel den Schalter nur dann öffnen, wenn entweder eine Auslösung oder eine Diagnose der Zündvorrichtung erfolgen soll.

Vorzugsweise wird für eine Diagnose der Zündvorrichtung der Schalter in vorgegebenen Zeitabständen für eine Dauer von ca. 20µs geöffnet. Diese Zeit ist geringer als die minimale Zündverzugszeit, welche die Zündvorrichtung normalerweise bei einem Stromfluß benötigt, um auszuösen.

Vorteilhafterweise ist der elektrisch steuerbare Schalter ein Feldeffekttransistor.

Es kann eine erste optische Anzeige vorhanden sein, die bei Kurzschluß des Stromkreises der Zündvorrichtung aufleuchtet, und es kann eine zweite Anzeige vorgesehen werden, die bei einer Fehlfunktion des Kurzschlußschalters aufleuchtet.

### Zeichnung

Anhand von in der Zeichnung dargestellten Ausführungsbeispielen wird nachfolgend die Erfindung näher erläutert.
Es zeigen:
Figur 1 ein Blockschaltbild einer ersten Ausführung zur Ansteuerung der Zündvorrichtung eines Airbags,
Figur 2 Deaktivierungsschaltmittel bei einem rückwärts gerichteten Kindersitz und
Figur 3 ein Blockschaltbild einer zweiten Ausführung zur Ansteuerung der Zündvorrichtung eines Airbags.

### Beschreibung von Ausführungsbeispielen

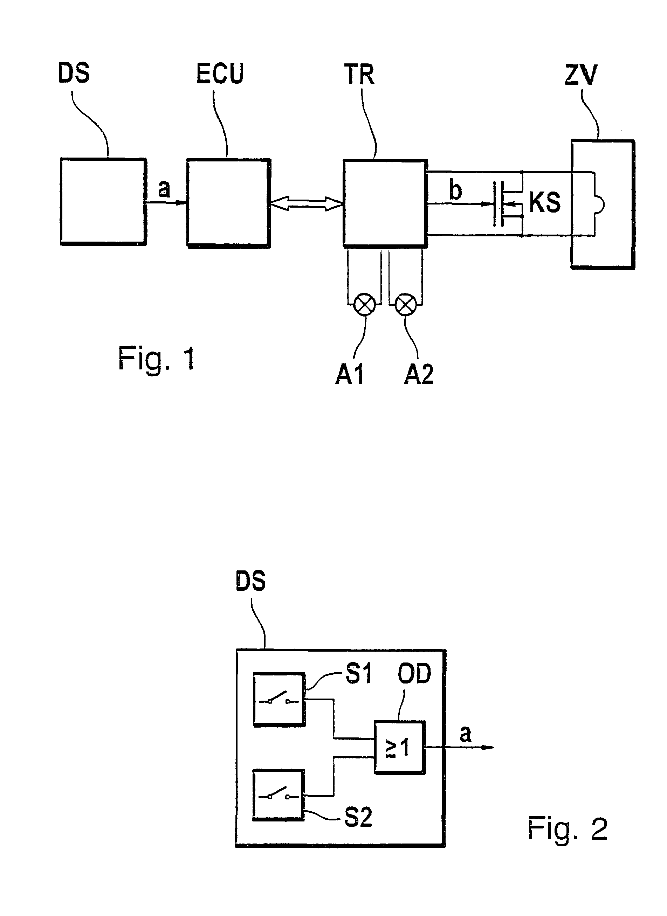

Der in der Figur 1 dargestellte Schaltblock DS symbolisiert Deaktivierungsschaltmittel, welche ein Deaktivierungssignal a abgeben, wenn die Sitzbelegung auf dem Beifahrersitz eine Aktivierung des Beifahrerairbags im Falle eines Crashes verbietet. Wie bereits einleitend erwähnt, gehört dazu z. B. die Belegung des Beifahrersitzes mit einem rückwärts gerichteten Kindersitz oder, wenn sich auf dem Beifahrersitz keine Person befindet. Die Deaktivierungsschaltmittel DS können im einfachsten Fall ein von Hand betätigbarer Schalter sein oder aus einer Sensorik bestehen, welche die Art der Sitzbelegung, insbesondere einen rückwärts gerichteten Kindersitz, erkennt. In der Einleitung sind einige bekannte Sensorsysteme dargelegt worden.

Das vom Schaltblock DS abgegebene Deaktivierungssignal a wird einer Steuereinheit ECU zugeführt. Diese Steuereinheit ECU entscheidet in bekannter Weise in Abhangigkeit von Beschleunigungssensorsignalen unter Zuhilfenahme eines geeigneten Algorithmus darüber, ob im Falle eines Fahrzeugcrashes die Zündvorrichtung ZV für den Beifahrerairbag ausgelöst werden soll oder nicht. Wenn hier und im Folgenden vom Beifahrerairbag gesprochen wird, sind damit auch alle anderen Airbags, (z.B. Seitenairbags, Kniebags, Kopfairbags und dgl.) gemeint, welche zum Schutz des Beifahrers im Fahrzeug installiert sind.

Mit dem Deaktivierungssignal a erhält die Steuereinheit ECU die Information, dass ein Nichtauslösefall für den Beifahrerairbag vorliegt. Dementsprechend steuert die Steuereinheit ECU eine Treiberschaltung TR für die Zündvorrichtung ZV an. Die Zündvorrichtung ZV wird von einem elektrisch steuerbaren Kurzschlußschalter KS, vorzugsweise einem Feldeffekttransistor (MOSFET) überbrückt. Im Nichtauslösefall erzeugt die Treiberschaltung TR ein Steuersignal b für den Kurzschlußschalter KS, wodurch dieser leitend schaltet und damit den Stromkreis der Zündvorrichtung ZV kurzschließt. Falls also ein Strom, aus welchen Gründen auch immer, im Stromkreis der Zündvorrichtung ZV fließt, wird dieser über den Kurzschlußschalter KS abgeleitet. Als Folge davon kann es also nicht zu einer Auslösung der Zündvorrichtung ZV kommen. Der Beifahrerairbag wäre für diesen Fall also sicher deaktiviert.

Die Steuereinheit ECU erhält das Deaktivierungssignal a über einen Signalpfad, der völlig unabhängig ist von einem Signalpfad, über den von einem Mikrocontroller ein aufprallbedingtes Auslösesignal zugeführt wird.

Sobald die Steuereinheit ECU der Treiberschaltung TR signalisiert, dass der Kurzschlußschalter KS zur Deaktivierung des Beifahrerairbags zu schließen ist, steuert die Treiberschaltung TR eine Anzeige A1 an, womit der Deaktivierungszustand des Beifahrerairbags im Fahrzeug angezeigt wird.

In der Regel führt die Steuereinheit ECU eine Funktionsdiagnose der Zündvorrichtung ZV durch. Diese Diagnose besteht darin, dass der Widerstand der Zündvorrichtung periodisch gemessen wird. Weicht dieser Widerstand von einem vorgegebenen Referenzwert um ein bestimmtes Maß ab, so wird eine an die Treiberschaltung TR angeschlossene zweite Anzeige A2 angesteuert, um einen solchen Fehlerfall anzuzeigen. Wenn der Zündkreis über den Kurzschlußschalter KS kurzgeschlossen ist, müßte die Steuereinheit ECU bei der Diagnose einen Widerstand von ca. 0 Ω feststellen. Sollte der Kurzschlußschalter KS fehlerbehaftet sein, so würde ein von 0 Ω abweichender Widerstand gemessen. So läßt sich durch die Steuereinheit ECU auch eine Diagnose des Kurzschlußschalters KS durchführen. Sollte ein Fehler des Kurzschlußschalters KS festgestellt werden, so wäre ebenfalls die Anzeige A2 anzusteuern.

In der Figur 2 ist schematisch ein spezielles Beispiel für die Deaktivierungsschaltmittel DS dargestellt. Bei diesen Deaktivierungsschaltmitteln DS wird von einem rückwärts gerichteten Kindersitz ausgegangen, der mit zwei Rastelementen, wie z.B. in der EP 06 037 33 B1 beschrieben, ausgestattet ist, welche in eine Befestigungsvorrichtung am Beifahrersitz einrastbar sind. Jedes der beiden Rastelemente ist mit einem Schalter S1, S2 ausgestattet, der schließt, wenn das zugehörige Rastelement am Kindersitz an der Befestigungsvorrichtung am Beifahrersitz eingerastet ist. Mit dem Schließen der Schalter S1, S2 wird ein Deaktivierungssignal a für die Steuereinheit ECU ausgegeben. Da es versehentlich passieren kann, dass nur einer der beiden Rastelemente am Kindersitz ordnungsgemäß an der Befestigungsvorrichtung des Beifahrersitzes einrastet, aber auch für diesen Fall erkennbar sein muß, dass ein Kindersitz auf dem Beifahrersitz liegt, ist im Schaltblock DS ein Oder-Gatter OD vorgesehen, das ein Deaktivierungssignal a bereits dann abgibt, wenn nur einer der beiden Schalter S1, S2 geschlossen ist.

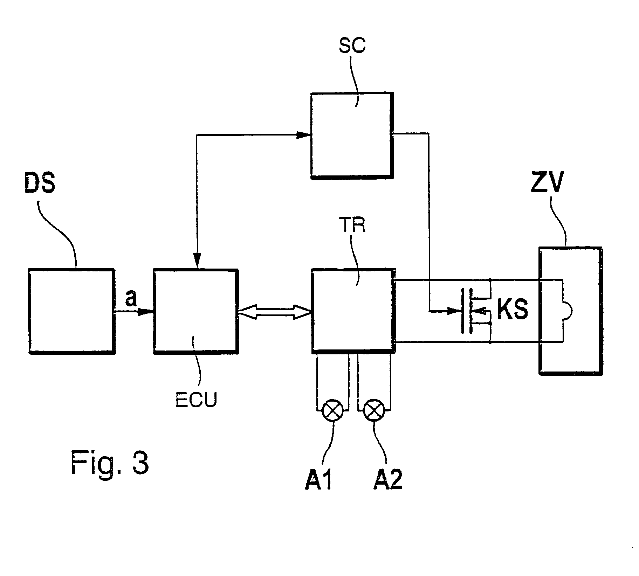

Wie einem in der Figur 3 dargestellten weiteren Ausführungsbeispiel zu entnehmen ist, sind neben den bereits beschriebenen Schaltungsblöcken weitere Schaltungsmittel SC vorhanden, die anstelle der Treiberschaltung TR den Kurzschlußschalter KS ansteuern. Diese Schaltungsmittel SC halten den Kurzschlußschalter KS dauerhaft geschlossen, so dass die Zündvorrichtung ZV kurzgeschlossen ist und kein Strom über die Zündvorrichtung ZV fließen kann.

Es gibt lediglich zwei Situationen, in denen die Schaltungsmittel SC den Kurzschlußschalter KS öffnen. Die eine Situation ist die, dass die Schaltungsmittel SC von der Steuereinheit ECU die Information erhalten, dass wegen eines Fahrzeugcrashes eine Auslösung des Airbags erfolgen soll. Liegt allerdings von den Deaktivierungsmitteln DS in der Steuereinheit ECU eine Information a vor, dass wegen einer besonderen Sitzbelegungsart der Airbag nicht ausgelöst werden darf, wird auch in diesem Fall der Kurzschluß der Zündvorrichtung ZV aufrecht erhalten. Die zweite Situation, in der der Kurzschlußschalter KS von den Schaltungsmitteln SC geöffnet wird, ist die, dass die Steuereinheit ECU eine Diagnose der Zündvorrichtung ZV durchführt. Dazu wird in vorgegebenen Zeitabständen von z. B. 1s der Kurzschlußschalter KS für eine Dauer von ca. 20µs geöffnet. Diese Zeit ist kürzer als die minimale Vorzugszeit, welche die Zündvorrichtung bei Durchfluß eines ausreichend großen Stromes benötigt um auszulösen. Damit kann es z. B. bei einem Kurzschluß auf einer Leitung der Zündvorrichtung ZV nach Masse und vollem Zündstrom von 1,75A unbekannter Herkunft nicht zu einer ungewollten Auslösung kommen.

Die Schaltungsmittel SC können außer der beschriebenen Ansteuerung für die Zündvorrichtung noch die Funktion einer Auslöse-Plausibilitätskontrolle haben.

## Patentansprüche

1. Anordnung zur Deaktivierung einer Zündvorrichtung für einen Airbag in einem Fahrzeug, wobei Schaltmittel (DS) vorhanden sind, welche bewirken, dass die Zündvorrichtung (ZV) nicht von einem sie auslösenden Strom durchflossen werden kann, wobei die Zündvorrichtung (ZV), von einem elektrisch steuerbaren Schalter (KS) überbrückt ist, der dann den Stromkreis der Zündvorrichtung (ZV) kurzschließt, wenn die Schaltmittel (DS) einen Nichtauslösefall signalisieren, **dadurch gekennzeichnet, dass** der Nichtauslösefall in Abhängigkeit von einer Belegungsart des Beifahrersitzes bestimmt wird.

2. Anordnung nach Anspruch 1, **dadurch gekennzeichnet, dass** die Schaltmittel (DS) aus einem von Hand betätigbaren Schalter bestehen.

3. Anordnung nach Anspruch 1, **dadurch gekennzeichnet, dass** die Schaltmitttel (DS) aus einer Sensorik bestehen, welche die Art der Sitzbelegung erfasst.

4. Anordnung nach einem der Ansprüche 1 oder 3, **dadurch gekennzeichnet, dass** die Schaltmittel (DS) mit einer Rastvorrichtung zusammenwirken, mit der ein Kindersitz auf dem Beifahrersitz eines Fahrzeugs arretierbar ist, und dass die Schaltmittel (DS) dann einen Nichtauslösefall signalisieren, wenn die Rastvorrichtung eingerastet ist.

5. Anordnung nach Anspruch 1, **dadurch gekennzeichnet, dass** der elektrisch steuerbare Schalter (KS) ein Feldeffekttransistor ist.

6. Anordnung nach Anspruch 1, **dadurch gekennzeichnet, dass** eine optische Anzeige (A1) vorhanden ist, die bei Kurzschluss des Stromkreises der Zündvorrichtung (ZV) aufleuchtet.

## Claims

1. Arrangement for deactivating a firing device for an airbag in a vehicle, there being switching means (DS) which have the effect of preventing a current which triggers the firing device (ZV) from flowing through said firing device (ZV), the firing device (ZV) being bypassed by an electrically controllable switch (KS) which then short-circuits the circuit of the firing device (ZV) if the switching means (DS) signal a case of non-triggering, **characterized in that** the case of non-triggering is determined as a function of the type of occupancy of the front passenger seat.

2. Arrangement according to Claim 1, **characterized in that** the switching means (DS) are composed of a switch which can be activated manually.

3. Arrangement according to Claim 1, **characterized in that** the switching means (DS) are composed of a sensor system which senses the type of occupancy of the seat.

4. Arrangement according to one of Claims 1 or 3, **characterized in that** the switching means (DS) interact with a latching device with which a child seat can be secured to the front passenger seat of a vehicle, and **in that** the switching means (DS) signal a case of non-triggering if the latching device is engaged.

5. Arrangement according to Claim 1, **characterized in that** the electrically controllable switch (KS) is a field-effective transistor.

6. Arrangement according to Claim 1, **characterized in that** there is a visual display (A1) which lights up when the circuit of the firing device (ZV) short-circuits.

## Revendications

1. Dispositif pour désactiver un dispositif d'allumage d'airbag dans un véhicule dans lequel se trouvent des moyens de commutation (DS) qui assurent que le dispositif d'allumage (ZV) ne puisse être traversé par un courant le déclenchant, le dispositif d'allumage (ZV) étant court-circuité par un commutateur (KS) commandable électriquement qui shunte alors le circuit électrique du dispositif d'allumage (ZV) lorsque les moyens de commutation (DS) signalent un cas de non-déclenchement,
**caractérisé en ce que**
le cas de non-déclenchement est déterminé en fonction du mode d'occupation du siège passager.

2. Dispositif selon la revendication 1,
**caractérisé en ce que**
les moyens de commutation (DS) sont constitués par un commutateur actionnable manuellement.

3. Dispositif selon la revendication 1,
**caractérisé en ce que**
les moyens de commutation (DS) se composent d'un capteur sensoriel qui détermine le mode d'occupation du siège.

4. Dispositif selon l'une quelconque des revendications 1 ou 3,
**caractérisé en ce que**
les moyens de commutation (DS) coopèrent avec un dispositif d'enclipsage à l'aide duquel un siège bébé peut être bloqué sur le siège passager d'un véhicule et les moyens de commutation (DS) signalent alors un cas de non-déclenchement lorsque les dispositifs d'enclipsage sont enclipsés.

5. Dispositif selon la revendication 1,
**caractérisé en ce que**
le commutateur commandable électriquement (KS) est un transistor à effet de champ.

6. Dispositif selon la revendication 1,
**caractérisé en ce qu'**
on prévoit un affichage optique (Al) qui s'allume lors d'un court-circuit du circuit électrique du dispositif d'allumage (ZV).
